# EUROPEAN PATENT SPECIFICATION

(11) **EP 0 594 374 B1**
(45) Date of publication and mention of the grant of the patent: **02.01.1997**
(21) Application number: 93308253.9
(22) Date of filing: 15.10.1993
(51) Int. Cl.: A47J 37/10, C25D 11/18

(54) **Cookware and a method of forming same**
Kochgeschirr und Verfahren zu dessen Ausgestaltung
Ustensile de cuisson et procédé pour sa modification

(30) Priority: 23.10.1992 GB 9222275
(43) Date of publication of application: 27.04.1994
(73) Proprietor: MEYER MANUFACTURING CO., LTD, Hong Kong (HK)
(72) Inventor: Cheng, Stanley Kin-Sui, Kwun Tong, Kowloon (HK)
(74) Representative: Findlay, Alice Rosemary

(56) References cited:
- EP-A- 0 259 056
- EP-A- 0 424 072
- DE-A- 1 546 934
- US-A- 2 618 258

## Description

This invention relates to cookware having a non-stick cooking surface.

It has been proposed, for example in the applicants' European Patent Applications 259056 entitled "Frying Pans" and 424072 entitled "Cookware" to provide various non-stick cooking surfaces for cookware. By far and away the most widely used and best known non-stick surface is that provided by a PTFE coating. Such coatings are applied to the interior surfaces of cookware and the cookware may, for example be made of a number of materials including aluminium.

There are, however, problems in the abrasion resistance of such a PTFE coating since it is a relatively soft material and easily scratched. Furthermore, problems are encountered in attaching the PTFE coating to the aluminium substrate. The two European Patent applications mentioned above, the contents of which are incorporated herein by reference, disclose means for increasing the abrasion resistance and adhesion of a PTFE coating .

It is an object of the invention to provide a cooking surface and a method of forming same which provides a more durable non-stick layer.

According to the invention in a first aspect there is provided a method of forming a cooking surface on an aluminium cooking utensil having an aluminium substrate comprising the steps of hard anodizing the substrate and applying a non-stick coating thereto, characterised in that a particulate layer of material is sprayed on the anodised layer prior to applying the non-stick coating. Preferably, the layer of material is sprayed by arc spraying, plasma spraying or flame spraying and the material used is selected from ceramics, aluminium oxide or stainless steel. In particular, arc spraying is used for stainless steel, while plasma spraying or flame spraying is used for either ceramics,aluminium oxide or stainless steel.

The presence of the sprayed layer provides a half spherical layer of particles on a hard anodized layer which creates high peaks/deep valleys to provide an increased anchoring effect for the subsequently deposited non-stick layer.

Preferably the non-stick layer is formed by conventional means, for example with the use of a primer coat followed by PTFE intermediate and top coats.

Preferably the substrate is roughened or etched.

According to the invention in a further aspect there is provided a cooking utensil having a cooking surface formed in accordance with the method recited above.

Embodiments of the invention will now be described by way of example with reference to the accompanying drawings in which:
Figure 1 is a schematic cross sectional view of a cooking surface of a cooking utensil formed in accordance with a first embodiment of the invention.
Figure 2 is a view similar to figure 1 of a cooking utensil formed in accordance with a second embodiment of the invention.
Figure 3 is a view similar to figure 1 of a cooking utensil formed in accordance with a third embodiment of the invention.
Figure 4 is a view similar to figure 1 of a cooking utensil formed in accordance with a fourth embodiment of the invention.

The method of the invention is substantially the same as that disclosed in European Patent Application 424072 in which the surface layer 12 of an aluminium substrate 10 is hard anodized.

However, at this stage, an additional method step is added in accordance with the present invention, namely that a layer of material 14 is sprayed onto the hard anodized layer 12. The spraying method may be of any suitable form, for example arc spraying, plasma spraying or flame spraying and the material may be ceramic, aluminium oxide or stainless steel. In particular, arc spraying is used for stainless steel, while plasma spraying and flame spraying is used for either ceramics, aluminium oxide or stainless steel. Spraying does not provide a flat layer on the hard anodized material but, rather, provides a distributed array of half-spherical particles which provide a highly undulating structure with high peaks being formed by the particles and deep valleys therebetween.

Following the application of the sprayed layer, a PTFE coating is applied in the usual way, namely by the application of a primer layer 16, for example polyphenylene sulphide (PPF) or PES resin and following this, two layers of PTFE, an intermediate coat 18 and top coat 20. Thereafter, the whole is cured in a conventional manner by heating to approximately 427°C which cures the primer and the PTFE to provide the non-stick surface.

The particle layer by providing such an uneven surface increases the ability of the non-stick layer to anchor itself to the aluminium substrate thus improving the durability of the coating.

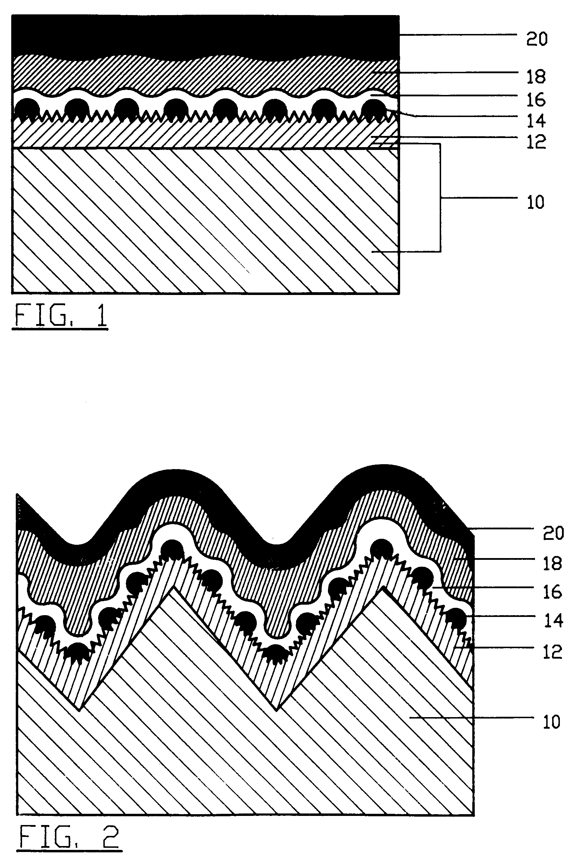

In both figures 1 and 2, the aluminium substrate 10 is roughened, for example by grit blasting, chemical etching or electro chemical etching, in accordance with the method disclosed in European Patent Application 424072.

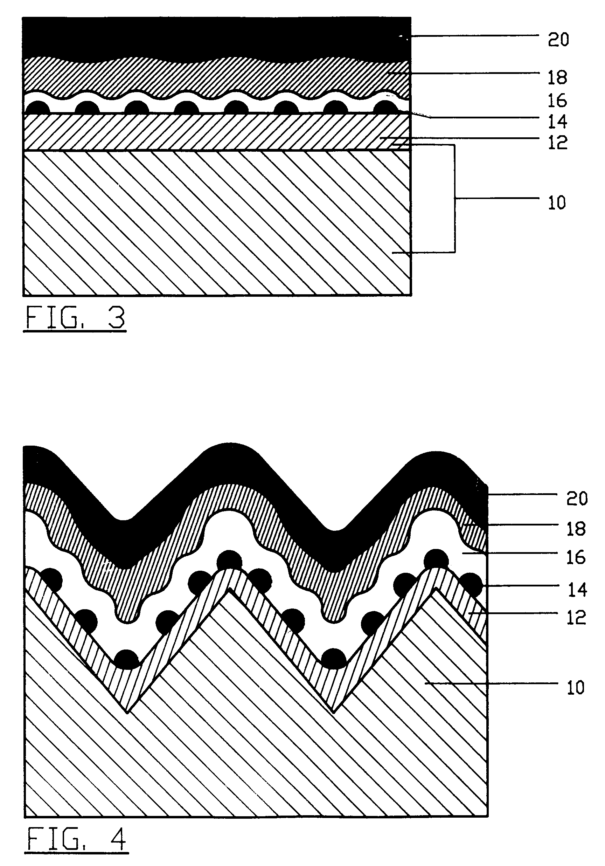

Because of the high peak/deep valley effect, however, we can eliminate the previous roughening process of an aluminium substrate , for example see figures 3 and 4.

Figure 2 is the same as figure 1 whilst figure 3 is the same as figure 4, save that figures 2 and 4 show the invention applied to an aluminium substrate having a saw-tooth pattern of similar form to that disclosed in European Patent application 259056 which provides both the advantages of increased durability of the present invention together with increased wear resistance of the PTFE layer as a whole.

## Claims

1. A method of forming a cooking surface of a cooking utensil having a aluminium substrate (10) comprising the steps of hard anodizing the substrate (10) and applying a non-stick coating (16,18,20) thereto, characterized in that a particulate layer of material (14) is sprayed on the anodized layer (12) prior to applying the non-stick coating (16,18,20).

2. A method as claimed in claim 1 wherein the layer of material is sprayed by arc spraying, plasma spraying or flame spraying.

3. A method as claimed in claim 1 or claim 2 wherein the sprayed material is selected from ceramics, aluminium oxide, or stainless steel.

4. A method as claimed in anyone of the preceding claims wherein the non-stick layer is formed from PTFE.

5. A method as claimed in claim 4 wherein the PTFE layer is formed from a primer coat followed by intermediate and top coats.

6. A method as claimed in anyone of the preceding claims wherein the substrate is roughened or etched prior to hard anodizing.

7. A method as claimed in anyone of the preceding claims wherein the substrate is formed with a plurality of peaks and troughs.

8. A method as claimed in claim 7 wherein the peaks and troughs give the substrate a surface having a saw-tooth pattern.

9. A cooking utensil having a cooking surface formed in accordance with the method of any one of the preceding claims.

10. A cooking utensil having a cooking surface formed from hard-anodized aluminum (12) and having a particular layer of material (14) sprayed thereon and a non-stick coating (16,18,20) applied to the sprayed layer.

11. A cooking utensil as claimed in claim 10 wherein the particulate material is ceramics, aluminium oxide or stainless steel.

12. A cooking utensil as claimed in claim 10 or claim 11 wherein the substrate is provided with a pattern of peaks and troughs.

## Patentansprüche

1. Verfahren zur Bildung einer Kochoberfläche an einem Kochgerät, welches ein Aluminiumsubstrat (10) hat, umfassend die Schritte des hart-anodischen Oxidierens des Substrats (10) und Auftragen eines nicht-klebenden Überzugs (16, 18, 20) darauf,
**dadurch gekennzeichnet**, daß ein teilchenförmiges Beschichtungsmaterial (14) auf die anodisch oxidierte Schicht (12) gespritzt wird, bevor der nicht-klebende Überzug (16, 18, 20) aufgebracht wird.

2. Verfahren nach Anspruch 1,
**dadurch gekennzeichnet**, daß das Beschichtungsmaterial durch Lichtbogenspritzen, Plasmaspritzen oder Flammspritzen aufgespritzt wird.

3. Verfahren nach Anspruch 1 oder 2,
**dadurch gekennzeichnet**, daß das Spritzmaterial ausgewählt wird aus Keramiken, Aluminiumoxid oder rostfreiem Stahl.

4. Verfahren nach einem der vorhergehenden Ansprüche,
**dadurch gekennzeichnet**, daß der nicht-klebende Überzug aus PTFE gebildet wird.

5. Verfahren nach Anspruch 4,
**dadurch gekennzeichnet**, daß der PTFE-Überzug aus einer Primer-Schicht, gefolgt von Zwischen- und Deckschichten, gebildet wird.

6. Verfahren nach einem der vorhergehenden Ansprüche,
**dadurch gekennzeichnet**, daß das Substrat vor dem hart-anodischen Oxidieren aufgerauht oder geätzt wird.

7. Verfahren nach einem der vorhergehenden Ansprüche,
**dadurch gekennzeichnet**, daß das Substrat mit einer Mehrzahl von Bergspitzen und Tälern geformt wird.

8. Verfahren nach Anspruch 7,
**dadurch gekennzeichnet**, daß die Bergspitzen und Täler auf der Substratoberfläche ein sägezahnförmiges Muster formen.

9. Kochgerät mit einer Kochfläche, gebildet entsprechend dem Verfahren nach einem der vorhergehenden Ansprüche.

10. Kochgerät mit einer Kochfläche, gebildet aus hartanodisch oxidiertem Aluminium (12) und mit einer besonderen Schicht aus einem Material (14), welches darauf gespritzt wird, und mit einem nicht klebenden Überzug (16, 18, 20), aufgetragen auf die gespritzte Schicht.

11. Kochgerät nach Anspruch 10,
**dadurch gekennzeichnet**, daß das teilchenförmige Material Keramik, Aluminiumoxid oder rostfreier Stahl ist.

12. Kochgerät nach Anspruch 10 oder 11,
**dadurch gekennzeichnet**, daß das Substrat mit einem Muster aus Bergspitzen und Tälern versehen ist.

## Revendications

1. Procédé de formation d'une surface de cuisson d'un ustensile de cuisson possédant un substrat d'aluminium (10) comprenant les étapes suivantes : le durcissement par anodisation du substrat (10), et l'application d'un revêtement (16, 18, 20) qui n'accroche pas au substrat, caractérisé en ce qu'une couche particulaire d'une matière (14) est pulvérisée sur la couche anodisée (12) avant l'application du revêtement (16, 18, 20) qui n'accroche pas

2. Procédé selon la revendication 1, dans lequel la couche de matière est pulvérisée par un procédé de pulvérisation dans un arc, dans un plasma ou à la flamme.

3. Procédé selon la revendication 1 ou 2, dans lequel la matière pulvérisée est choisie parmi les céramiques, l'oxyde d'aluminium et l'acier inoxydable.

4. Procédé selon l'une quelconque des revendications précédentes, dans lequel la couche qui n'accroche pas est formée de PTFE.

5. Procédé selon la revendication 4, dans lequel la couche de PTFE est formée d'une couche d'accrochage, puis de couches intermédiaire et supérieure.

6. Procédé selon l'une quelconque des revendications précédentes, dans lequel le substrat est rendu rugueux ou attaqué chimiquement avant le durcissement par anodisation.

7. Procédé selon l'une quelconque des revendications précédentes, dans lequel le substrat est réalisé avec des crêtes et des creux.

8. Procédé selon la revendication 7, dans lequel les crêtes et les creux donnent au substrat une surface à dessin en dents de scie.

9. Ustensile de cuisson possédant une surface de cuisson réalisée par mise en oeuvre du procédé selon l'une quelconque des revendications précédentes.

10. Ustensile de cuisson possédant une surface de cuisson formée par durcissement par anodisation d'aluminium (12) et portant une couche particulaire d'une matière (14) pulvérisée et un revêtement (16, 18, 20) qui n'accroche pas et qui est appliqué à la couche pulvérisée.

11. Ustensile de cuisson selon la revendication 10, dans lequel la matière particulaire est une céramique, l'oxyde d'aluminium ou l'acier inoxydable.

12. Ustensile de cuisson selon la revendication 10 ou 11, dans lequel le substrat possède un dessin formé de crêtes et de creux.
